# EUROPÄISCHE PATENTANMELDUNG

(11) **EP 2 279 788 A2**
(43) Veröffentlichungstag der Anmeldung: **02.02.2011**
(21) Anmeldenummer: 10007419.4
(22) Anmeldetag: 17.07.2010
(51) Int. Cl.: B01L 3/00, F16K 99/00

(54) **Vorrichtung zur Erzeugung einer mikrofluidischen Kanalstruktur in einer Kammer, Verfahren zu ihrer Herstellung und ihre Verwendung**

(30) Priorität: 30.07.2009 DE 102009035291
(71) Anmelder: Karlsruher Institut für Technologie, 76131 Karlsruhe (DE)
(72) Erfinder: Voigt, Achim, 76344 Eggenstein-Leopoldshafen (DE); Rapp, Bastian, 76137 Karlsruhe (DE); Carneiro, Leonardo, 30360690 Belo Horizonte (BR)

(57) **Zusammenfassung**

Die Erfindung betrifft eine Vorrichtung zur Erzeugung einer mikrofluidischen Kanalstruktur in einer Kammer **6,** die einen Hohlraum zur Aufnahme eines Fluids zwischen zwei Platten bildet, wobei
- die Kammer **6** mindestens einen Zufluss **101** zur Zuführung des Fluids in die Kammer **6** und mindestens einen Abfluss **102** zur Abgabe des Fluids aus der Kammer **6** aufweist,
- mindestens eine der beiden Platten mit einem Kühlelement zur Versetzung des Fluids in der Kammer **6** in einen festen Zustand versehen ist und
- dieselbe oder die andere Platte eine Vielzahl von Heizelementen aufweist, die derart über der Platte verteilt sind, dass durch Aufheizen eines Teils der Heizelemente eine Kanalstruktur vom mindestens einen Zufluss **101** durch die Kammer **6** zum mindestens einen Abfluss **102** zur Führung eines Fluidstroms ausbildbar ist.

Die Erfindung betrifft weiterhin ein Verfahren zur Herstellung der Vorrichtung und deren Verwendung als frei programmierbare mikrofluidische Struktur in der Hochdurchsatzanalyse, der Hochdurchsatzsynthese, der Bildschirmtechnik oder der Anzeigetechnik.

## Beschreibung

Die Erfindung betrifft eine Vorrichtung zur Erzeugung einer mikrofluidischen Kanalstruktur in einer Kammer, die einen Hohlraum zur Aufnahme eines Fluids zwischen zwei Platten bildet, ein Verfahren zu ihrer Herstellung und ihre Verwendung.

Mikrofluidische Systeme weisen in der Regel eine ihrer Anwendung entsprechend ausgestaltete mikrofluidische Kanalstruktur auf, die in einem festen Substrat insbesondere aus Silizium, einem Metall, einer Keramik oder einem Polymer ausgeführt ist. Diese Struktur wird meist über mikrosystemtechnische Verfahren wie z. B. Lithographie mit anschließenden Ätzverfahren oder Silizium-Oberflächentechnik ausgeführt. Für Polymere werden häufig Replikationstechniken wie Spritzguss und Heißprägen eingesetzt. Allen diesen Verfahren ist gemeinsam, dass die damit erzeugte Struktur unveränderlich ist, d.h. die genauen Abmessungen, die Geometrie und die Ausführung der Struktur müssen vor ihrer Erzeugung festgelegt werden und lassen sich im Nachhinein nicht mehr verändern.

Es sind bereits Vorschläge bekannt, die sich mit dem Aspekt der Programmierung einer mikrofluidischen Struktur befassen. Die WO 2007/012638 A1 offenbart eine Vorrichtung, mit der kleine Tropfen einer Flüssigkeit auf der Basis der Elektrobenetzung *(electrowetting)* über elektrische Kontakte bewegt und in Folge von Spannungen und daraus resultierenden Feldstärken die Benetzungsneigung der Tropfen verändert werden. Damit kann ein Tropfen über ein Array von elektrischen Kontakten bewegt werden.

Weiterhin sind Vorrichtungen bekannt, die mit unterschiedlich chemisch oder physikalisch modifizierten Oberflächen arbeiten, die die Benetzungsneigung eines Tropfens verändern. Hierunter zählen Oberflächen mit Nanostrukturen, welche den so genannten Lotuseffekt ausnutzen, ebenso Vorrichtungen, die mit Oberflächenladungen oder chemischer Hydrophobisierung arbeiten (WO 2007/090531 A1).

Allerdings erzeugen diese Vorrichtungen keine mikrofluidische Struktur im eigentlichen Sinne, sie bewegen nur eine bestimmte Menge einer Flüssigkeit. Diese Systeme eignen sich für die diskrete Manipulierung von Flüssigkeiten in Tropfenform, jedoch nicht für die Druckbeaufschlagung oder kontinuierliche Beströmung von Flüssigkeiten, wie sie für nahezu alle Biosensoren erforderlich ist. Derartige Vorrichtungen sind darüber hinaus sehr empfindlich für Druckschwankungen, da die Gleichgewichte und Haltekräfte, die durch die Oberflächen ausgeübt werden, sehr gering sind. Es ist somit schwierig größere Mengen an Flüssigkeit in diese Vorrichtungen einzubringen. Für biomedizinische Anwendungen sind sie darüber hinaus deswegen oft nicht geeignet, da die Interaktionsflächen bzw. die Oberflächen stark benetzt sind. Proteine und vergleichbare Biomoleküle lagern sich daher oft an diesen Oberflächen ab, was die Konzentrationen der Flüssigkeiten verändert und Probenkontamination durch Quervermischung verursacht. Darüber hinaus sind die einzelnen Flüssigkeitströpfchen in diesen Systemen nur durch Luft voneinander getrennt; der Verdunstung und Querkontamination lässt sich somit nicht entgegenwirken, daher sind diese Systeme für kritische biomedizinische Anwendungen ungeeignet.

Eine weitere Gruppe von Vorrichtungen zur Erzeugung von programmierbaren mikrofluidischen Strukturen sind Systeme mit Membranventilen. M.-P. Chang und M. M. Maharbiz beschreiben in Electrostatically-driven elastomer components for userreconfigurable high density microfluidics, Lab Chip 9, S. 1274-1281, 2009, Systeme, die Aktoren auf der Basis von deflektierbaren Membranen, vorwiegend in Silikon (Polydimethylsiloxan, PDMS), einsetzen.

Das beschriebene System erzeugt die Kanalstruktur thermisch; es sind keine bewegten aktiven Komponenten notwendig, was das System problemlos auf eine beliebige Größe skalierbar macht. Der limitierende Faktor liegt allein in den physikalischen Dimensionen der Heizelemente, bei geringeren Abmessungen lassen sich mehr programmierbare Elemente auf einer Fläche unterbringen. Die Packungsdichte dieser passiven Strukturen wird immer größer sein als die Packungsdichte eines vergleichbaren Systems mit aktiven Strukturen, wie z.B. Membranventilen.

Nachteilig hieran ist jedoch, dass die Strukturen im eigentlichen Sinne nicht frei programmierbar sind, sondern durch die Formgebung der Ventile im Voraus festgelegt werden müssen. Damit wird die freie Wahl der mikrofluidischen Strukturen stark eingeschränkt, da sich die Ventilstrukturen nicht beliebig dicht packen lassen. Darüber hinaus ist die Auswahl an Materialien, die sich für diese Art von Ventilen eignen, erheblich eingeschränkt; in den meisten Fällen stehen nur Silikone zur Verfügung. Diese Materialien eignen sich nur bedingt für kritische Applikation in der biomedizinischen Technik, vor allem durch ihre Quellneigung in Wasser und die hohe Adsorption von Biomolekülen. Ein weiterer Nachteil liegt in der Zuverlässigkeit dieser Ventilstrukturen, die dann ein Problem wird, wenn eine große Anzahl dieser Ventile für eine programmierbare Struktur benötigt wird. Silikone sind darüber hinaus gasdurchlässig, was die Verdunstung von Flüssigkeiten innerhalb der mikrofluidischen Strukturen ermöglicht und somit die Konzentrationen der Lösungen über die Zeit verändert. Dies ist überaus kritisch für analytische Anwendungen.

Die US 2008/0164155A1 oder WO 2008/117209A1 offenbaren Einrichtungen zum thermischen Management in mikrofluidischen Systemen. Hierdurch werden chemische oder biologische Reaktionen in einem mikrofluidischen System entwickelt oder reguliert, z.B. die Vervielfältigung einer DNA mittels Polymerase-Kettenreaktion *(polymerase chain recation,* PCR). Keines dieser Systeme nutzt jedoch das Wärmemanagement, um damit eine mikrofluidische Kanalstruktur im eigentlichen Sinne zu erzeugen.

Aus der US 2009/0044875 A1 ist eine Vorrichtung zur Erzeugung einer mikrofluidischen Kanalstruktur bekannt, bei der mit Hilfe einer Vielzahl von über die Vorrichtung verteilten Heizelementen unterschiedliche Fluidkanäle durch geeignete Schaltung der Heizelemente verschlossen und geöffnet werden, wobei die Kanäle unter Wärmeeinwirkung durch Quellung der aus einem geeigneten Polymer bestehenden Kanalwände verschlossen werden.

Die US 2007/0227592 A1 offenbart ein Ventil zur Steuerung des Durchflusses durch eine mikrofluidische Vorrichtung. Durch Aufheizen des Ventils, dehnt sich das Materials, aus dem das Ventil besteht, aus und blockiert den Durchfluss durch einen ausgewählten Kanal.

Die US 2003/0106596 A1 beschreibt ein mikrofluidisches System zur Steuerung der Zufuhr und der Mischung von Flüssigkeiten, die auf Temperaturänderungen reagieren. Hierzu weist jeder Einlasskanal ein Ventil mit eingeschlossenem Heizelement auf. Durch das Aufheizen mindestens eines Ventils ändert sich die Viskosität der darin befindlichen Flüssigkeit und somit der Durchfluss durch den zugehörigen Kanal.

In der US 2005/0236056 A1 wird ein Ventil beschrieben, das mittels Einfrieren und Aufheizen betrieben wird und das ein Peltier-Element umfasst.

Ausgehend hiervon ist es die Aufgabe der vorliegenden Erfindung, eine Vorrichtung zur Erzeugung einer mikrofluidischen Kanalstruktur in einer Kammer, die einen Hohlraum zur Aufnahme eines Fluids zwischen zwei Platten bildet, ein Verfahren zu ihrer Herstellung und ihre Verwendung vorzuschlagen, die die vorher genannten Nachteile und Einschränkungen nicht aufweisen.

Insbesondere soll eine Vorrichtung bereitgestellt werden, mit der sich frei programmierbare mikrofluidische Kanalstrukturen erzeugen und, falls gewünscht, auch nachträglich verändern lassen.

Diese Aufgabe wird im Hinblick auf die Vorrichtung durch die Merkmale des Anspruchs 1, im Hinblick auf das Verfahren durch die Verfahrensschritte des Anspruchs 6 und im Hinblick auf die Verwendung durch den Anspruch 12 gelöst. Die Unteransprüche beschreiben jeweils vorteilhafte Ausgestaltungen der Erfindung.

Die erfindungsgemäße Vorrichtung bedient sich zur Erzeugung von mikrofluidischen Kanalstrukturen dem Prinzip der Veränderung physikalischer Eigenschaften eines Fluids, insbesondere einer Flüssigkeit, in Folge einer Temperaturerhöhung und Temperaturabsenkung.

Herzstück der Vorrichtung bildet eine Kammer, die einen Hohlraum zwischen zwei vorzugsweise ebenen Platten bildet. An mindestens einer dieser Platten, für die bevorzugt eine Leiterplatte eingesetzt wird, ist eine Vielzahl von Heizelementen aufgebracht, die über der Platte verteilt sind. Die Heizelemente sind insbesondere in Form kleiner Heizwiderstände aufgebracht und bevorzugt als Ohmscher Widerstand oder als Diode ausgestaltet.

Vorzugsweise weist die mindestens eine Platte ein strukturiertes Netzwerk aus Leiterbahnen auf, die zur Ansteuerung der Heizelemente dienen. In einer besonderen Ausgestaltung ist diese Netzwerkstruktur durch eine dünne Deckelstruktur von der Platte abgegrenzt.

In einer besonderen Ausgestaltung werden die Heizelemente durch galvanische Kontaktierung einzeln kontaktiert und lassen sich somit unabhängig voneinander ein- und ausschalten. Die galvanische Kontaktierung erfolgt insbesondere durch mindestens eine Lage auf der Platte, auf der die Netzwerkstruktur der Leiterbahnen aufgebracht ist.

In einer bevorzugten Ausgestaltung entspricht die Anordnung der Heizelemente einer Anordnung, wie sie in klassischen elektronischen Balkendisplays verwendet wird. Mit diesen elektronischen Balkendisplays wurden bis zum Durchbruch der LCD-Technik Informationen in Form von Buchstaben und Ziffern dargestellt. Auf dieselbe Weise lassen sich mittels der vorliegenden Erfindung auch mikrofluidische Kanalstrukturen erzeugen, ändern und einsetzen.

Unterhalb der Platte, worauf die Heizelemente aufgebracht sind, oder alternativ auf der gegenüberliegenden Platte schließt sich vorzugsweise in flächiger Ausgestaltung ein Kühlelement als Wärmesenke an. Hierfür eignen sich insbesondere Kühlrippenstrukturen mit einer angeschlossenen Heatpipe, Ventilationssysteme oder Peltier-Elemente.

Ein erfindungsgemäßes Verfahren zur Erzeugung und Änderung einer mikrofluidischen Kanalstruktur in einer Kammer, die einen Hohlraum zur Aufnahme eines Fluids zwischen zwei Platten bildet, weist die Schritte a) bis c) auf.

Gemäß Schritt a) wird ein Fluid, d.h. eine Flüssigkeit oder ein Gas, in die Kammer durch einen oder mehrere Zuflüsse eingeführt, insbesondere mit der Flüssigkeit komplett gefüllt.

Als Flüssigkeit wird vorzugsweise
- ein flüssiges Polymer, insbesondere ein Thermoplast, bevorzugt Polymethylmethacrylat (PMMA) oder Polycarbonat (PC),
- ein flüssiger Kohlenwasserstoff, insbesondere Tetradekan (C₁₄H₃₀) oder hochflurierte Kohlenwasserstoffe wie z. B. Thermoöle, oder
- eine Lösung eines Mittler- oder Trennmediums, das sich insbesondere für Anwendungen in der Medizintechnik oder der Biotechnologie eignet,
eingesetzt. Alternativ wird die Kammer mit einem Gas gefüllt.

Anschließend wird gemäß Schritt b) das Fluid, d.h. das Gas oder die Flüssigkeit, in der Kammer durch ein Kühlelement, das sich an mindestens eine der beiden Platten befindet, in einen festen Zustand versetzt. Hierzu wird dem Fluid durch Einschalten des Kühlelements, das wie eine Wärmesenke wirkt, bevorzugt auf kontinuierliche Weise Wärme entzogen. Dies bewirkt, dass das Gas oder die Flüssigkeit in Folge der Temperatureinwirkung fest wird, entweder in Folge von Einfrieren bzw. Sublimation, einer chemischen Umwandlung, insbesondere einer Kristallisation, oder infolge des Absenkens der Temperatur einer thermoplastischen Polymerschmelze unter den Glasübergangspunkt. Das Fluid stellt in dieser Form einen Festkörper dar, in den die mikrofluidische Kanalstrukturen eingearbeitet werden können.

Im sich hierzu anschließenden Schritt c) wird ein Teil einer Vielzahl von Heizelementen, die auf derselben oder der anderen Platte über die Platte verteilt sind, selektiv eingeschaltet. Im Betrieb heizen sich die ausgewählten Heizelemente auf. Infolge der entstehenden Wärmentwicklung um die Heizelemente wird der eingangs beschriebe Erstarrungsprozess des Fluids in der Kammer infolge der Temperatureinwirkung lokal rückgängig gemacht. Der Festkörper verflüssigt sich bzw. verdampft somit in Umkehrung zum jeweils gewählten Effekt wieder, insbesondere durch Wiedererwärmen der Polymerschmelze über den Glasübergangspunkt. Dadurch wird um jedes der selektiv ausgewählten Heizelemente lokal ein Bereich der erstarrten Flüssigkeit wieder verflüssigt. Auf diese Weise bildet sich in der Kammer eine Kanalstruktur vom Zufluss bzw. den Zuflüssen zum Abfluss oder den Abflüssen aus, die sich zur Führung eines Fluidstroms durch die Kammer eignet. Die Flüssigkeit oder das Gas kann aus der entstandenen Kanalstruktur nun ganz oder teilweise über die definierten Ein- und Auslässe der Kammer in der Anschlussleiste durch eine extern angebrachte Pumpen entleert und durch dasselbe oder ein oder mehrere weitere Fluide neu befüllt werden.

In einer bevorzugten Ausgestaltung wird im Anschluss an den Schritt c) gemäß einem zusätzlichen Schritt d) das Aufheizen mindestens eines anderen Teils der Vielzahl von Heizelementen beendet, wodurch sich durch Verfestigung der Verlauf der Kanalstruktur ändert.

In einer besonderen Ausgestaltung wird ein photoreaktiv vernetzbares Polymer als Fluid eingesetzt, das im Anschluss an Schritt c) oder d) durch Belichtung und damit einhergehende Vernetzung des Polymers verfestigt wird. Insbesondere wird hierbei ein Teil des verfestigten Polymers durch Belichtung oder Einwirkung von Lösungsmitteln wieder aufgelöst wird, wodurch sich der Verlauf der Kanalstruktur ändert.

Gemäß der gewählten Flüssigkeit in der Kammer und dem entsprechenden physikalischen oder chemischen Effekt der Verfestigung dieser Flüssigkeit, wird nach dem Erstellen der mikrofluidischen Kanalstruktur wie folgt vorgegangen:
**1. Thermisch instabile Struktur:** Das gewählte Fluid erfordert die Aufrechterhaltung des thermischen Managements, so dass die Wärmequellen und die Wärmesenke konstant in Betrieb gehalten werden müssen, um eine ungewollte Wiederverfestigung zu verhindern.
**2. Thermisch stabile Struktur:** Das gewählte Fluid erfordert kein Aufrechterhalten der Wärmeflüsse; die Struktur ist stabil und die weitere Wärmezu- und -abfuhr kann entfallen.

Abhängig von der thermischen Stabilität kann die geschriebene mikrofluidische Kanalstruktur in verschiedener Form eingesetzt werden.

Im Falle einer **thermisch instabilen Struktur** lässt sich die Struktur unter Aufrechterhaltung der Wärmeflüsse direkt für mikrofluidische Anwendungen einsetzen. Dabei kann die Kanalstruktur während des Experiments auf die exakt gleiche Weise verändert werden, was eine ungeahnte Bandbreite an möglichen Anwendungen erschließt. Das thermische Management garantiert dabei eine sehr exakte Temperierung aller im System geförderten Flüssigkeiten, was einen entscheidenden Vorteil darstellen kann. Nachteilig ist hierbei jedoch, dass die notwendigen Temperaturgradienten eventuell zu einem Einfrieren von Fremdflüssigkeit im System führen kann, weshalb solche Kanalstrukturen auf diejenigen mikrofluidischen Applikationen beschränkt bleiben, bei denen die geförderten Fluide nie direkt in Kontakt mit den Wänden des Systems treten. Derartige Anwendungen werden als Tröpfchen-Mikrofluidik oder *droplet microfluidics* bezeichnet und sind im Bereich der Hochdurchsatzsysteme weit verbreitet.

Das Löschen einer thermisch instabilen Struktur ist einfach, hierfür muss das System zunächst von Fremdflüssigkeiten entleert werden. Die Kammer wird anschließend aufgeheizt, z.B. über die Wärmesenke (!). Im Falle einer Peltier-Kühlung wird hierbei lediglich die Spannung am Peltier-Block invertiert. Auf diese Weise verflüssigt sich der gesamte Inhalt der Kammer und die mikrofluidische Struktur wird gelöscht. Sie kann dann, gemäß dem beschriebenen Prozess, erneut erzeugt werden, indem die Flüssigkeit zunächst wieder eingefroren wird.

Eine weitere Möglichkeit der Anwendung besteht nun darin, die thermisch instabile Struktur in diesem Zustand zu fixieren. Wird als Flüssigkeit ein photoreaktiv vernetzbares Polymer eingesetzt, so kann dies z.B. durch Belichtung und die damit einhergehende Vernetzung der Polymerkette geschehen. Eine solche Struktur ist nach der Vernetzung stabil, auch wenn die Wärmeflüsse des Systems abgeschaltet werden. Ein solches System ermöglicht die kostengünstige Herstellung von mikrofluidischen Komponenten, ähnlich einem 3D-Drucker.

Im zweiten Fall, der den Einsatz einer Flüssigkeit, aus der eine **thermisch stabile Struktur** erzeugt wird, beschreibt, ist ein Löschen der Struktur nur dann möglich, wenn sich durch Einwirkung von außen, z.B. durch Belichtung oder durch Einwirkung von Lösungsmitteln, die Stabilität der erzeugten Struktur wieder auflösen lässt. Andernfalls ist ein Löschen der Struktur nicht möglich. Sie kann dann aber aus dem System entnommen werden und für weitere mikrofluidische Anwendungen zum Einsatz kommen. Hiermit stünde ebenfalls ein, einem 3D-Drucker ähnliches System zur kostengünstigen und schnellen Herstellung von mikrofluidischen Komponenten zur Verfügung.

Die erfindungsgemäße Vorrichtung lässt sich überall verwenden, wo mikrofluidische Strukturen eingesetzt werden. Beispiele hierfür reichen von biosensorischen bis hin zu Syntheseapplikationen, der Lebensmittel- und Umwelttechnik und vergleichbaren Anwendungen. Besondere Bedeutung kommt hierbei den Lab*on-Chip* Systemen, d.h. vollintegrierten Analysesystemen auf mikrotechnischer Skala zu.

Der Aspekt der exakten Temperierung der erzeugten mikroflui-dischen Kanalstrukturen ist ein angenehmer Nebeneffekt der vorgeschlagenen Vorrichtung, die somit in der Lage ist, als Wirtsstruktur für die Durchführung von Experimenten zu dienen.

Die Erfindung wird im Folgenden anhand von Ausführungsbeispielen und den Figuren näher erläutert. Es zeigen:
- **Fig. 1**: Schematischer Aufbau einer Vorrichtung zur thermischen Erzeugung von mikrofluidischen Kanalstrukturen;
- **Fig. 2**: Vorrichtung zur thermischen Erzeugung von mikrofluidi- schen Kanalstrukturen mit skizzierter Anschlussleiste;
- **Fig. 3**: **(a)** Vorderansicht und **(b)** Seitenansicht (Schnitt) der Vorrichtung zur thermischen Erzeugung von mikrofluidi- schen Kanalstrukturen mit gelöschter Kanalstruktur;
- **Fig. 4**: **(a)** Vorderansicht und **(b)** Seitenansicht (Schnitt) der Vorrichtung zur thermischen Erzeugung von mikrofluidi- schen Kanalstrukturen mit geschriebener Kanalstruktur;
- **Fig. 5**: Schematische Aufsicht auf die Vorrichtung zur thermi- schen Erzeugung mikrofluidischer Kanalstrukturen, **(a)** ausgewählte Heizelemente werden angeschaltet, wo- durch sich, wie in **(b)** gezeigt, eine entsprechende mikrofluidische Kanalstruktur öffnen lässt.

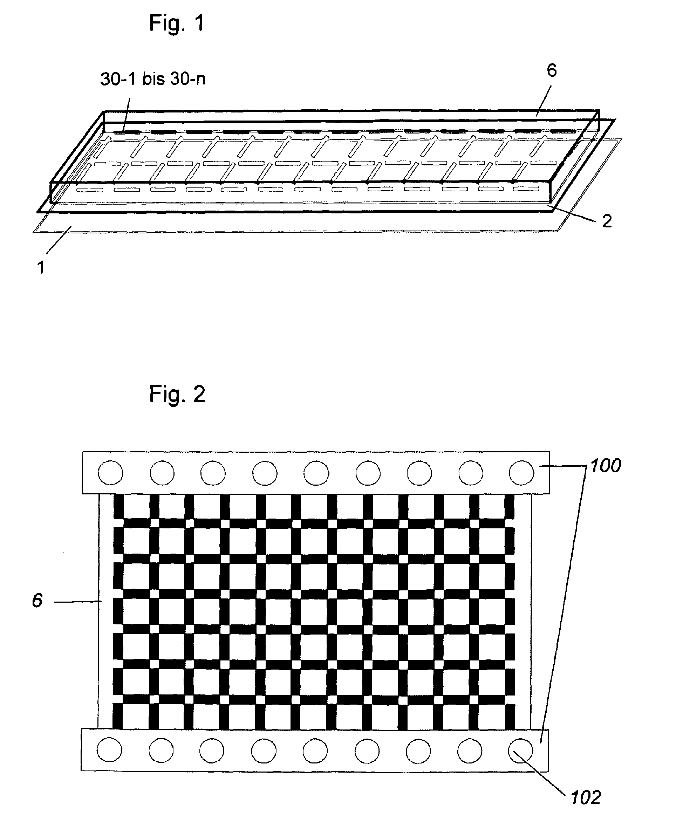

**Fig. 1** zeigt schematisch eine Vorrichtung zur thermischen Erzeugung von mikrofluidischen Kanalstrukturen. Die Vorrichtung besteht aus einem (nicht dargestellten) Gehäuse, vorzugsweise aus Metall oder Kunststoff, mit einer eingearbeiteten Kammer **6,** worin ein bekanntes Volumen eines flüssigen Polymers, z.B. eines Thermoplasten wie Polymethylmethacrylat (PMMA) oder Polycarbonat (PC), eines flüssigen Kohlenwasserstoffes (z.B. Tetradekan C₁₄H₃₀), einer Lösung, eines Mittler- oder Trennmediums eingefüllt wird, wie sie etwa für Anwendungen in der Medizintechnik oder der Biotechnologie benötigt werden. Für diesen Zweck sind geeignete Zu- und Abflüsse **102** mit der Kammer **6** verbunden, über die sich die Kammer nach Bedarf neu befüllen oder entleeren lässt.

Auf mindestens einer Seite dieser Kammer befindet sich eine Platte **2,** bevorzugt eine Leiterplatte, auf der eine Vielzahl von Wärmequellen **30-1 bis 30-n,** die vorzugsweise in Form von Heizelementen ausgestaltet sind, angeordnet ist. Die Platte **2** ist dabei so ausgeführt, dass jedes der Heizelemente (Wärmequellen) **30-1 bis 30-n** jeweils einzeln galvanisch kontaktiert ist. Hierfür weist die Platte **2** bevorzugt ein strukturiertes Leiterbahnnetzwerk auf, das insbesondere über separat galvanisch getrennte Ebenen innerhalb der planaren Struktur geführt wird. Ein bevorzugtes Beispiel hierfür ist eine mehrlagige *(multilayer)* Platine. Die Heizelemente **30-1 bis 30-n** sind als Dioden oder ohmsche Widerstände ausgestaltet, z.B. in SMD Ausführung. Die entsprechende galvanische Kontaktierung ermöglicht es, über eine geeignete elektrische Verbindung und eine entsprechende elektrische Ansteuerung, die nicht dargestellt ist, jedes einzelne Heizelement getrennt von allen anderen Heizelementen ein- und auszuschalten.

Unterhalb der Platte **2** oder auf der gegenüberliegenden Platte **1** der Kammer ist ein Kühlelement als Wärmesenke angeordnet. Das Kühlelement ist bevorzugt in Form einer Kühlrippenstruktur mit angeschlossener Heatpipe oder eines Ventilationssystems, eines Peltier-Elements oder einer anderen physikalischen oder chemischen Kältequelle sein, z.B. endotherme Reaktion, Kühlbehälter mit flüssigem Stickstoff oder anderen Gasen, ausgeführt. Die Kammer **6,** die Platte **2** und die Wärmesenke sind derart angeordnet, dass sie untereinander einen möglichst geringen thermischen Widerstand aufweisen.

Wie in **Fig. 2** dargestellt, wird die Kammer **6** wird durch Zu-und Abflüsse fluidisch kontaktiert, um ein Austauschen des flüssigen Mediums in der Kammer zu gewährleisten. Hierzu besitzt die Kammer geeignete Anschlussleisten **100,** insbesondere aus einem Polymer, einem Metall oder einer Keramik, auf, die die fluidische Zuführungen **102** zur Kammer **6** aufweisen. Die Zuführungen **102** sind als fluidische Kopplungssysteme, bevorzugt als Luer-Anschluss oder HPLC-fähiger Anschluss mit Gewinde und geeigneten Dichtflächen, ausgeführt. Dabei hat das System mindestens einen Zufluss und mindestens einen Abfluss.

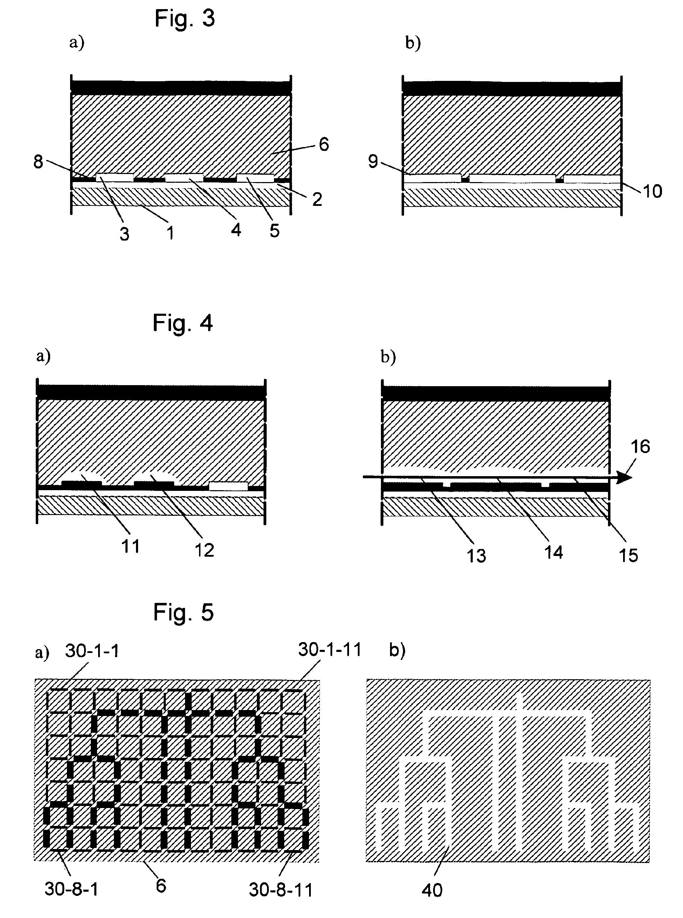

Wie **Fig. 3** zeigt, wird im Betrieb die Wärmesenke konstant betrieben, während die Heizelemente abgeschaltet bleiben. Die Wärmeabfuhr durch die Platte **2** und die Heizelemente **3, 4, 5, 9 und 10** bewirkt, dass die Flüssigkeit in der Kammer **6** in Folge der Temperatureinwirkung fest wird, entweder in Folge von Einfrieren, einer chemischen Umwandlung, bevorzugt Kristallisation, oder infolge des Absenkens der Temperatur einer thermoplastischen Polymerschmelze unter den Glasübergangspunkt. Infolge der Abkühlung wird die Flüssigkeit somit temporär zu einem Festkörper. Die ausgeführten Zu- und Abflüsse **102** in die Kammer **6** sind somit verschlossen, womit jeder Flüssigkeitstransport durch die Kammer **6** unterbunden wird.

Im zweiten Schritt werden nun selektiv einzelne Heizelemente über die Platte **2** und einer zugehörigen elektrischen Ansteuerung unter Spannung gesetzt, wodurch sie sich erwärmen. In **Fig. 4** ist eine Situation dargestellt, bei der die Heizelemente **3,4,9 und 10** unter Spannung gesetzt werden. Durch die dabei entstehende Wärmentwicklung oberhalb der Heizelemente wird der oben beschriebe Erstarrungsprozess der Flüssigkeit in der Kammer **6** infolge der Temperatureinwirkung lokal rückgängig gemacht. Der Festkörper verflüssigt sich somit in Umkehrung zum jeweils gewählten Effekt wieder, z.B. durch Wiedererwärmen der Polymerschmelze über den Glasübergangspunkt. Dadurch wird über jedem der Heizelemente lokal ein Bereich der erstarrten Flüssigkeit wieder verflüssigt (Hohlräume **11 und 12** jeweils entsprechend zu den Heizelementen **3 und 4** sowie Hohlräume **13, 14 und 15** jeweils entsprechend zu den Heizelementen **4,9 und 12).**

Dabei ist zu beachten, dass Temperaturverteilung und Wärmetransport durch die Wärmesenke so gewählt werden, dass die Hohlräume direkt oberhalb der Heizelemente entstehen. Durch eine geeignete Wahl der einzelnen Heizelemente und deren paralleles Anschalten kann nun eine geeignete Verkettung von lokaler Verflüssigung erreicht werden, die es ermöglicht eine mikrofluidische Kanalstruktur zu öffnen, aus der zunächst die ursprünglich in die Kammer **6** eingebrachte Flüssigkeit durch einen über eine externe Pumpe erzeugten Fluss **16** entfernt werden kann.

**Fig. 5** zeigt das Prinzip der thermischen Erzeugung einer variablen mikrofluidischen Kanalstruktur. Die Wahl der Einstellung der Heizelemente **30-1-1 bis 30-8-11** ermöglicht es, eine variable mikrofluidische Struktur **40** in der Kammer **6** zu erzeugen, die sich für verschiedene mikrofluidische Anwendungen einsetzen läst. Hierunter zählen analytische und kombinatorische Anwendungen sowie Synthesen. Dabei ist die Anordnung der Kanalstruktur **40** so auszuführen, dass die in der Anschlussleiste **100** vorgesehenen fluidischen Anschlussstellen **102** mit der mikrofluidischen Kanalstruktur **40** in Verbindung stehen und sie daher an der gewünschten Stelle befüllt, entleert und beprobt werden kann.

## Patentansprüche

1. Vorrichtung zur Erzeugung einer mikrofluidischen Kanalstruktur in einer Kammer (6), die einen Hohlraum zur Aufnahme eines Fluids zwischen zwei Platten bildet, wobei
- die Kammer (6) mindestens einen Zufluss (101) zur Zuführung des Fluids in die Kammer (6) und mindestens einen Abfluss (102) zur Abgabe des Fluids aus der Kammer (6) aufweist,
- mindestens eine der beiden Platten mit einem Kühlelement zur Versetzung des Fluids in der Kammer (6) in einen festen Zustand versehen ist und
- mindestens eine der beiden Platten eine Vielzahl von Heizelementen aufweist, die derart über der Platte verteilt sind, dass durch Aufheizen eines Teils der Heizelemente und die **dadurch** bewirkte Verflüssigung von Bereichen um die Heizelemente eine Kanalstruktur vom mindestens einen Zufluss durch die Kammer (6) zum mindestens einen Abfluss (102) zur Führung eines Fluidstroms ausbildbar ist.

2. Vorrichtung nach Anspruch 1, wobei die mindestens eine Platte ein strukturiertes Netzwerk aus Leiterbahnen zur Ansteuerung der Heizelemente aufweist.

3. Vorrichtung nach Anspruch 2, wobei die mindestens eine Platte aus mindestens zwei Lagen besteht und das strukturierte Netzwerk aus Leiterbahnen über galvanisch getrennte Lagen innerhalb der Platte geführt wird.

4. Vorrichtung nach einem der Ansprüche 1 bis 3, wobei die Heizelemente als Ohmscher Widerstand oder als Diode ausgestaltet sind.

5. Vorrichtung nach einem der Ansprüche 1 bis 4, wobei der Kühlkörper in Form einer Kühlrippenstruktur mit einer angeschlossenen Heatpipe, eines Ventilationssystems oder eines Peltier-Elements ausgestaltet ist.

6. Verfahren zur Erzeugung einer mikrofluidischen Kanalstruktur in einer Kammer (6), die einen Hohlraum zur Aufnahme eines Fluids zwischen zwei Platten bildet, mit den Schritten
a) Einführen eines Fluids in die Kammer (6) durch mindestens einen Zufluss (101),
b) Versetzen des Fluids in der Kammer (6) in einen festen Zustand durch ein Kühlelement, das sich an mindestens eine der beiden Platten befindet,
c) Aufheizen mindestens eines Teils der Vielzahl von Heizelementen, die auf mindestens einer der beiden Platten über die Platte verteilt sind, so dass sich durch Verflüssigung von Bereichen um die Heizelemente eine Kanalstruktur vom mindestens einen Zufluss durch die Kammer (6) zu mindestens einen Abfluss (102) zur Führung eines Fluidstroms ausbildet.

7. Verfahren nach Anspruch 6, wobei im Anschluss an Schritt c) der folgende Schritt d) durchgeführt wird:
d) Beenden des Aufheizens mindestens eines anderen Teils der Vielzahl von Heizelementen, wodurch sich durch Verfestigung der Verlauf der Kanalstruktur ändert.

8. Verfahren nach Anspruch 6 oder 7, wobei als Flüssigkeit ein flüssiges Polymer, ein flüssiger Kohlenwasserstoff oder eine Lösung eines Mittler- oder Trennmediums eingesetzt wird.

9. Verfahren nach einem der Ansprüche 6 bis 8, wobei das Fluid im Anschluss an Schritt c) zumindest teilweise aus der Kammer (6) entnommen und durch mindestens ein weiteres Fluid ersetzt wird.

10. Verfahren nach einem der Ansprüche 6 bis 9, wobei ein photoreaktiv vernetzbares Polymer als Fluid eingesetzt wird, das im Anschluss an Schritt c) oder d) durch Belichtung und damit einhergehende Vernetzung des Polymers verfestigt wird.

11. Verfahren nach Anspruch 10, wobei ein Teil des verfestigten Polymers durch Belichtung oder Einwirkung von Lösungsmitteln wieder aufgelöst wird.

12. Verwendung einer Vorrichtung nach einem der Ansprüche 1 bis 5 als frei programmierbare mikrofluidische Struktur in der Hochdurchsatzanalyse, der Hochdurchsatzsynthese, der Bildschirmtechnik oder der Anzeigetechnik.
